# EUROPEAN PATENT SPECIFICATION

(11) **EP 3 969 538 B1**
(45) Date of publication and mention of the grant of the patent: **03.07.2024**
(21) Application number: 21713121.8
(22) Date of filing: 02.03.2021
(51) Int. Cl.: C09K 11/06, C09D 11/50, G01N 21/64, G07D 7/1205

(54) **POLYMERIC COMPLEXES OF LUMINESCENT LANTHANIDES AND FUNCTIONALIZED CELLULOSIC FIBER MATRICES FOR COUNTERFEIT DETECTION**
POLYMERE KOMPLEXE AUS LUMINESZIERENDEN LANTHANIDEN UND FUNKTIONALISIERTEN CELLULOSISCHEN FASERMATRIZEN ZUR FÄLSCHUNGSERKENNUNG
COMPLEXES POLYMÈRES DE LANTHANIDES LUMINESCENTS ET MATRICES DE FIBRES CELLULOSIQUES FONCTIONNALISÉES POUR LA DÉTECTION DES CONTREFAÇONS

(30) Priority: 05.03.2020 PT 2020116147
(43) Date of publication of application: 23.03.2022
(73) Proprietor: RAIZ - Instituto De Investigação Da Floresta E Papel, 3800-783 Eixo (PT); Universidade de Coimbra, 3004-531 Coimbra (PT)
(72) Inventor: Monteiro Valente, Artur José, 3004-535 Coimbra (PT); Caria Panelas Pais, Alberto António, 3004-535 Coimbra (PT); Bairrada Murtinho, Dina Maria, 3004-535 Coimbra (PT); Yoshiaki Matsushita, Alan Fernando, 3004-535 Coimbra (PT); Rodrigues De Tòvar Faro, Maria Pascoal, 3004-535 Coimbra (PT)
(86) International application number: PCT/IB2021/051710
(87) International publication number: WO 2021/176340

(56) References cited:
- WO-A1-03/105075
- US-B1- 6 402 986
- Rodrigues De Tovar Faro Maria Pascoal ET AL: "Raw Paper Functionalization for the Development of a Security Paper", , 18 November 2019 (2019-11-18), XP055808758, Retrieved from the Internet: URL:http://hdl.handle.net/10316/88042 [retrieved on 2021-05-28]
- N/a: "Item record: Raw Paper Functionalization for the Development of a Security Paper", , 28 May 2021 (2021-05-28), XP055808778, Retrieved from the Internet: URL:https://eg.uc.pt/handle/10316/88042?mo de=full [retrieved on 2021-05-28]
- N/a: "Item view and download statistics:Raw Paper Functionalization for the Development of a Security Paper (/handle/10316/88042)", , 28 May 2021 (2021-05-28), XP055808767, Retrieved from the Internet: URL:https://estudogeral.sib.uc.pt/cris/sta ts/item.html?handle=10316/88042&type=bitst ream [retrieved on 2021-05-28]
- MATSUSHITA ALAN F Y ET AL: "Energy transfer and multicolour tunable emission of Eu,Tb(PSA)Phen composites", COLLOIDS AND SURFACES A: PHYSIOCHEMICAL AND ENGINEERING ASPECTS, vol. 569, 21 February 2019 (2019-02-21), pages 93-101, XP085637357, ISSN: 0927-7757, DOI: 10.1016/J.COLSURFA.2019.02.049

## Description

### Technical Field

The present invention relates to a method for the detection of counterfeit through cellulosic fiber matrices functionalized with polymeric complexes of luminescent lanthanides, enabling two procedures for guaranteeing security / counterfeit detection.

### Background Art

The counterfeiting of products is currently seen as a global problem, affecting companies, governments, countries and industries, and even citizens in general can be individually affected by the acts of counterfeiters who operate against their rights, and may even jeopardize national security. Branded products, works of art, identification documents, advertising products, pharmaceutical products and national currencies are just some examples of products and materials subjected to counterfeiting. [1]

To meet the need for anti-counterfeiting technologies, different solutions have already been developed such, for example, printing of watermarks[2], holograms[3] and identification by radio frequency or RFID (Radio-Frequency Identification) [4]. However, the information incorporated by this RFID technique does not become fully protected and can be easily manipulated. On the other hand, the simplicity and ease of reproduction of watermarks and holograms make these anti-counterfeiting possible to be easily overcome by counterfeiters. Nanomaterials with UpConversion Luminescence capability, UCL, can also be applied as safety paints. UpConversion Luminescence, UCL, is a nonlinear optical process by which the emission of light with a shorter wavelength is induced by the absorption of incident light of a longer wavelength. The low internal quantum efficiency generally makes it difficult to directly apply materials with characteristics of conversion luminescence into counterfeit devices[5]. As Park and co-authors[5] and Liu and co-authors[6] demonstrate, nanocrystals doped with lanthanides are used for luminescence conversion effects of counterfeit devices. In fact, these rare earth metals have advantageous properties at the chemical and optical levels, due to their unique electronic structures, being used in different optical materials, such as in quantum dots, metallic organic structures and in plasmonic nanomaterials[7].

The rare earth elements, according to the International Union of Pure and Applied Chemistry (IUPAC), consist of a group of elements which includes all 15 lanthanides (lanthanum - La, cerium - Ce, praseodymium - Pr, neodymium - Nd, promethium - Pm, samarium - Sm, europium - I, gadolinium - Gd, terbium - Tb, dysprosium - Dy, holmium - Ho, erbium - Er, thulium - Tm, ytterbium - Yb and lutetium - Lu).

When applied individually, lanthanides exhibit low luminescence intensity. In order to overcome this disadvantage, lanthanide complexes with chromophores in their composition have begun to be developed. In order to increase the emission intensity of lanthanides, sensitizing chromophores capable of absorbing high amounts of light, called antennas, are incorporated into lanthanide complexes[7]. Then, one of the most common techniques used to improve the luminescent properties of lanthanides involves their complexation with organic ligands, usually organic ligands which have nitrogen (N) and oxygen (O) atoms in their chemical composition[8]. The organic ligands most commonly used and known in the literature are 1,10-phenanthroline, pyridine and aromatic carboxylic acids[9].

However, despite the improvement in the luminescent properties of lanthanides, these lanthanide complexes based on organic ligands need to be doped in matrices, which brings some disadvantages, such as low chemical stability, incompatibility with the matrix, long-time preparation, poor mechanical properties and limited water solubility. Therefore, the incorporation of lanthanide complexes in a polymeric matrix through interactions between the rare earth elements and the functional groups of the matrix polymers will present advantages in terms of the intrinsic luminescence of the lanthanide, mechanical properties, weight, transparency, low processing temperature, and thermal and impact resistance[10]. In these polymer complexes with lanthanides or polymer complexes with rare earths components, the chromophores are covalently linked to the polymeric backbone. This can be achieved in two different ways. The first is when low molecular weight complexes contain a polymerizable double bond, acting as monomers, and are (co)polymerized to synthesize polymer complexes with rare earths. The second, and most commonly applied, route is when a direct reaction occurs between the lanthanide ions and the functional groups of the polymer chains[11]. To improve the luminescent properties of lanthanides, more than one type of ligands can be used simultaneously, and can both act as antennae to decrease emission losses by non-radioactive means. As an example, the interaction between poly(sodium acrylate), PSA, and lanthanide ions (europium, Eu³⁺, and terbium, Tb³⁺) is mentioned in the literature, in which the resulting complexes show good luminescent properties, emitting red and green light, respectively. When phenanthroline is additionally used as a co-ligand, a synergistic effect is obtained, further improving the photoluminescent properties of the complex[10] .

The work of Gunnlaugsson and co-authors[12] shows the development of europium and phenanthroline complexes combined as copper Cu²⁺ sensors, for the determination of this ion in water at a pH of 7, through the luminescence suppression mechanism (quenching) of the Eu³⁺.

In the article by Cao and co-authors[13] it is shown how terbium complexes are sensitive to the presence of Fe³⁺, Al³⁺ and Cu²⁺ ions, being used for the development of organic structures of terbium base metals (Tb-MOFs), for the detection of these metal ions in water, also through the luminance suppression mechanism of the lanthanide.

Chen and co-authors[14] comment on the importance of the copper ion for the good mental and physical functioning of the human body, and on the need to develop methods for the efficient determination of this metal ion, with applications in the fields of biological analysis and medical diagnosis. A hydrogel was thus synthesized incorporating the europium and terbium lanthanides and polymers derived from poly (vinyl alcohol) and the polyacrylamide-co-poly (acrylic acid) copolymer. In the aqueous phase, the lanthanide complexes generate the luminescence extinction effect in the presence of Cu²⁺ ions.

The article by Gomez and co-authors[15] refers to the development of luminescent sensors based on metallic organic structures (MOFs), which incorporate lanthanides, namely terbium and europium, and terbium and europium 2-phenylsuccinate, as chemical detectors of agro-chemicals and cationic species.

Despite the scientific and technical developments described, there is still a need for the development of alternative methods for detecting counterfeit, which allow a double authentication, being able to be used on simple substrates, such as cellulosic fiber matrices, and already available on the market as, for example, common paper products, without substantial changes to their production process, thus having low production costs associated, through simple and accessible incorporation techniques, which can be customized according to, for example, the application, brand and concerned products.

Methods for counterfeit detection that employ lanthanide complexes are known from US 6 402 986 B1 and WO 09/105075 A1.

### References:

[1] J. Mater. Chem. C, 2013, 1, 2388-2403.
[2] IEEE Transactions on Information Forensics and Security, 2007, 2, 164 - 173.
[3] Optics Communications, 1995, 115, 429-436.
[4] Computers & Security, 2006, 25, 18-26.
[5] Advanced Functional Materials, 2016, 15, 7836 - 7846.
[6] Nanoscale, 2011, 3, 4804-4810.
[7] Nanoscale, 2016,8, 14297-14340.
[8] Chemical Society Reviews, 2016,45, 3244-3274.
[9] The Journal of Chemical Thermodynamics, Volume 132, May 2019, Pages 476-483
[10] Colloids and Surfaces A: Physicochemical and Engineering Aspects, 2019, 569, 91-101.
[11] Journal of Photochemistry and Photobiology A: Chemistry Volume 324, 30 June 2016, Pages 23-32
[12] Chemical Communications, 2004, 782-783.
[13] Chemistry - A European Journal, 2015, 26, 15705-15712.
[14] Soft Materials, 2019, 17, 350-358.
[15] Sensors (Basel), 2019, 19, 1260.
[16] Luminescence of Lanthanide Ions in Coordination Compounds and Nanomaterials, Angewandte Chemie International Edition, John Wiley and Sons, Hoboken, 2014.

### Summary of the Invention

The object of the present invention is a method for the detection of counterfeit through cellulosic fiber matrices functionalized with polymeric complexes of luminescent lanthanides, enabling two procedures for guaranteeing security / counterfeit detection.

A first authentication test is possible: the cellulosic matrices incorporated with the polymeric lanthanide complexes do not show any visual differences to the naked eye and, when excited using a UV lamp, they reveal the characteristic color of the lanthanide or of the set of lanthanides' emissions.

The polymeric lanthanide complexes described in this document and the cellulosic fiber matrices functionalized with the incorporation of these complexes also allow a second security authentication for products that may be subjected to counterfeit actions: the cellulosic fiber matrices functionalized with these complexes when brushed with copper or nickel solutions, under UV excitation, allow an immediate observation, and only in the areas of the matrix where the brush was applied, of a "shadow effect" of the color that was previously characteristic of the lanthanide's emission (quenching: suppression of the luminescence emission characteristic of lanthanide).

The method of detecting counterfeiting consists of the following steps:
For the first security guarantee / counterfeit detection:
   - functionalizing a cellulosic fiber matrix by incorporating in the formulation of the cellulosic fiber matrix at least one polymeric complex of luminescent lanthanides comprising at least one lanthanide salt, at least one aromatic hydrocarbon and a polymeric matrix by means of stamping, immersion and coating;
   - exposing the cellulosic matrix areas functionalized with the complex(es) under UV light and observation of the emission of the characteristic emission color of the lanthanide;
For the second security guarantee, the following procedure is considered:
   - functionalizing a cellulosic fiber matrix by incorporating at least one polymeric lanthanide complex by means of stamping, immersion and coating;
   - addition of copper or nickel solutions to the functionalized cellulosic fiber matrix;
   - exposing the areas of the cellulosic fiber matrix functionalized with the complex(es) and which suffered the addition of copper and / or nickel solutions under UV light and observation of the suppression of the emission of the color characteristic of the lanthanide emission.

For the addition of copper or nickel solutions, a pen containing a copper or nickel solution can be used for the application on the cellulosic fiber matrices.

In a preferred embodiment, the polymeric complex of luminescent lanthanides of step a) comprises an europium salt, 1-naphthoic acid, 1,10-phenanthroline and poly (sodium acrylate).

In a preferred embodiment, the polymeric complex of luminescent lanthanides of step a) comprises a terbium salt, 1-naphthoic acid, 1,10-phenanthroline and poly (sodium acrylate).

A cellulose matrix refers to a structure constituted by a set of cellulosic fibers such as, but not limited to, for example, common paper products already available on the market.

### Brief Description of Drawings

Figure 1. Stamps used for incorporating EuPSANapPhen and TbPSANapPhen on sheets of paper through stamping.
Figure 2. Photographs of the three types of paper *(filter* a), *base* b) and *office* c)) stamped with EuPSANapPhen, to the naked eye.
Figure 3. Photographs of *filter* a) and *base* b) papers stamped with EuPSANapPhen, under radiation with a wavelength of 254 nm.
Figure 4. Photographs of the three types of paper *(filter* a), *base* b) and *office* c)) stamped with TbPSANapPhen to the naked eye.
Figure 5. Photograph of the *filter* paper stamped with TbPSANapPhen, under radiation with a wavelength of 254 nm.
Figure 6. Photographs of the three types of paper *(filter* a), *base* b) and office c)) after immersion with EuPSANapPhen, to the naked eye.
Figure 7. Photograph of the *filter* paper after immersion with EuPSANapPhen, under radiation with a wavelength of 254 nm.
Figure 8. Photographs of the three types of paper (filter a), *base* b) and *office* c)) after immersion with TbPSANapPhen, to the naked eye.
Figure 9. Photograph of the *filter* paper after immersion with TbPSANapPhen, under radiation with a wavelength of 254 nm.
Figure 10. Photographs of the three types of paper *(filter* a), *base* b) and *office* c)) after coating with EuPSANapPhen, to the naked eye.
Figure 11. Photograph of the *filter* paper after coating with EuPSANapPhen, under 254 nm wavelength radiation.
Figure 12. Photographs of the three types of paper *(filter* a), *base* b) and *office* c)) after stamping with EuPSANapPhen and reaction to Cu2+ and Ni2+ ions, to the naked eye.
Figure 13. Photographs of the three types of paper *(filter* a), *base* b)) after stamping with EuPSANapPhen and reaction to Cu²⁺ and Ni²⁺ ions, under radiation with a wavelength of 254 nm.
Figure 14. Photographs of the three types of paper *(filter* a), *base* b) and *office* c)) after stamping with TbPSANapPhen and reaction to the Cu²⁺ and Ni²⁺ ions, to the naked eye.
Figure 15. Photographs of the filter paper after stamping with TbPSANapPhen and reaction to Cu²⁺ and Ni²⁺ ions, under radiation with a wavelength of 254 nm.
Figure 16. Photographs of the three types of paper *(filter* a), *base* b) and *office* c)) after immersion with EuPSANapPhen and reaction to Cu²⁺ and Ni²⁺ ions, to the naked eye.
Figure 17. Photographs of the three types of paper *(filter* a), *base* b) and *office* c)) after immersion with EuPSANapPhen and reaction to Cu²⁺ and Ni²⁺ ions, under radiation with a wavelength of 254 nm.
Figure 18. Photographs of the three types of paper *(filter* a), *base* b) and *office* c)) after immersion with TbPSANapPhen and reaction to the Cu²⁺ and Ni²⁺ ions, to the naked eye.
Figure 19. Photographs of the *filter* paper after immersion with TbPSANapPhen and reaction to Cu²⁺ and Ni²⁺ ions, under radiation with a wavelength of 254 nm.
Figure 20. Photographs of the three types of paper *(filter* a), *base* b) and *office* c)) after coating with EuPSANapPhen and reaction to the Cu²⁺ and Ni²⁺ ions to the naked eye.
Figure 21. Photograph of the *filter* paper after coating with EuPSANapPhen and reaction to Cu²⁺ and Ni²⁺ ions, under radiation with a wavelength of 254 nm.
Figure 22. Photographs of the three types of paper *(filter* a), *base* b) and *office* c)) after coating with TbPSANapPhen and reaction to Cu²⁺ and Ni²⁺ ions, to the naked eye.
Figure 23. Photographs of the three types of paper *(filter* a), *base* b) and *office* c)) after coating with TbPSANapPhen and reaction to Cu²⁺ and Ni²⁺ ions, under radiation with a wavelength of 254 nm.

### Detailed Description and Description of Preferred Embodiments

Some practical examples of applications of the products developed and corresponding methodologies are next presented in this document, in detail, but not limited to, according to preferred embodiments of its implementation.

### Preparation of polymeric lanthanide complexes, evaluation of their fluorescence properties and interaction with metal ions.

Examples of two possible polymeric lanthanide complexes as described in this invention were selected, the europium (Eu) and the terbium (Tb) lanthanides, as organic ligands the 1,10-phenanthroline (Phen) and 1-naphthoic acid (Nap) and poly (sodium acrylate), PSA, was the chosen polymer.

Aqueous solutions of 0.05 M PSA, 0.05 M EuCl₃.6H₂O and of 0.05 M TbCl₃.6H₂O were prepared. At the same time, solutions of 0.05 M 1-naphthoic acid and 0.05 M 1,10-phenanthroline were also prepared, using as solvent an ethanol: water solution (70:30, v / v).

These solutions were mixed, following the order PSA + Eu / Tb + phenanthroline + naphthoic acid, so that the final concentration of each component was 0.0125 M.

Fluorescence analyzes were performed using these solutions containing all components at a concentration of 0.0125 M. Emission and excitation spectra were recorded at different wave lengths.

The interactions of the complexes with metal ions were evaluated using fluorometric techniques, evaluating the quenching efficiency (luminescence suppression).

The synthesized polymeric complexes of lanthanides, EuPSANapPhen and TbPSANapPhen, are colorless on sight, but show intense fluorescence (red and green, respectively) when under UV radiation.

The antenna effect of the low molecular weight organic ligands, 1,10-phenanthroline and 1-naphthoic acid, is clearly visible, since the luminescence intensity undergoes a visible magnification.

After studying the luminescence properties of the two polymeric lanthanide complexes, EuPSANapPhen and TbPSANapPhen, their interaction mechanisms with different metal ions, namely with copper and nickel, were also verified. Aqueous solutions (10 mM) of Cu(NO₃)₂.xH₂O and Ni(NO₃)₂.6H₂O salts were prepared.

The addition of a Cu²⁺ and Ni²⁺ solution to EuPSANapPhen and TbPSANapPhen solutions leads to a different luminescence response, the above-mentioned quenching.

Thus, the metallic center's greater ability to interact with ligands is verified, which involves an energy transfer mechanism. In this type of system, the sensitization of the europium ion is blocked by the connection of the Cu²⁺/Ni²⁺ ions with the phenanthroline, and the excited state of the antenna undergoes an electronic transfer to the Cu²⁺/ Ni²⁺[16].

Additionally, it is observed that the quenching effect by adding copper is explicit, that is, as the amount of Cu²⁺ is increased, the intensity of the luminescence emission decreases.

### Paper Functionalization

Different types of incorporation techniques of polymeric lanthanide complexes (EuPSANapPhen and TbPSANapPhen) were tested, namely a) stamping of the paper with the solution of the complex, b) immersion of the paper, for a short period of time, in the solution of the complex, and c) coating of the paper with the complex solution.

For the stamping process, stamps with the letters EU and TB were used. 50 ml of the complex solution was inserted into a container, the stamps were dipped in the solution and then marked on the respective sheet of paper.

For the immersion of the paper in the complex solution, 50 mL of each solution was inserted in a container where the sheets of paper were left for a short period of time (in the order of seconds), only until the sheet was completely covered with solution. After that, the sheets of paper were left to dry overnight at room temperature.

For the paper coating operation, the EuPSANapPhen and TbPSANapPhen solutions were subjected to a lyophilization process and the obtained powder was added to a starch suspension, commonly used in the coating of paper sheets. The starch is dispersed in cold water and the dispersion is heated to 80°C with vigorous stirring. 0.45 µL of an enzymatic suspension (a-amylase) is added per gram of starch used and the dispersion is maintained at 80°C for 5 minutes. After that, 0.17 mL of zinc sulfate per gram of starch is added to deactivate the enzyme. Then, the dispersion is heated to 90°C-100°C and baked at that temperature for 15 min. The dispersion is cooled to 50°C and is finally ready for use. The complexes of lanthanide polymers are added at this point and left under stirring until used in the coating process. The coating with EuPSANapPhen was carried out using the RK Printcoat Instruments K Lox Proofer coater and the coating with TbPSANapPhen was carried out using a Mathis coater model SVA-IR-B.

80 g / m² commercial printing and writing paper (here identified as *office* paper), a *base* paper and *filter* paper from the brand Macherey-Nagel (type 713) were used. These three types of paper were selected due to their different constitution and processing: the *filter* paper consists only of cellulosic fibers with a low degree of processing during the production of this type of paper. The paper referred to, in this document, as *base* has been subjected to refining processes, and common additives have also been added, except for additives corresponding to the surface treatment of the paper sheets. In turn, printing and writing paper, according to its application, includes surface treatment additives, consequently including a totality of additives such as mineral fillers, starches, retention agents, bonding agents, optical agents and coating agents.

Photographic results to the naked eye of all the incorporation processes were obtained and later compared with those obtained in a dark room under UV excitation at λ = 254 nm.

Finally, copper nitrate and nickel solutions were used to test the response of the stamped, immersed and coated paper with EuPSANapPhen and TbPSANapPhen to the presence of metal ions. The results were also obtained photographically, with a Canon EOS 750D camera to the naked eye and under conditions with UV excitation (λ = 254 nm).

### Examples

### a) Paper stamped with the complex solution

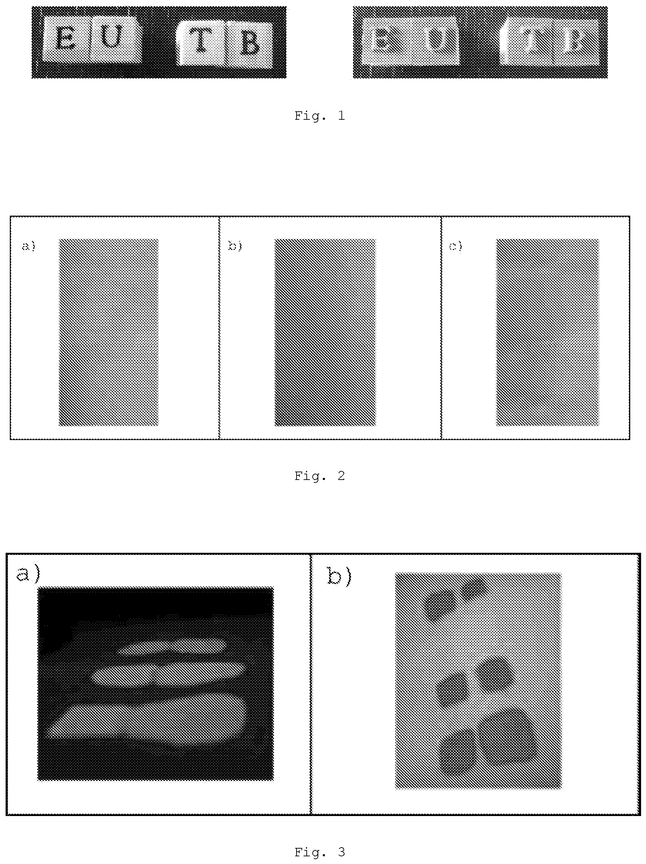

To test the effectiveness of incorporating EuPSANapPhen and TbPSANapPhen into sheets of paper by stamping the solutions of the complexes and to test the counterfeit detection capacity of these complexes incorporated by stamping, stamps with the letters EU and TB were used, Figure 1.

After stamping the respective sheets of paper with the solutions of EuPSANapPhen and TbPSANapPhen, the sheets were left to dry at room temperature for 24 hours. In person observations by the human eye and photographic results were obtained and later compared with those obtained in a dark room under UV excitation at λ = 254 nm.

For this type of application it is necessary to take into account that the pressure / force made while stamping can lead to small variations in the results obtained.

Figure 2 shows the visual aspect of the three different types of paper sheets stamped with EuPSANapPhen, showing that it was possible to incorporate the lanthanide complex in the three types of paper, Figure 2, without visual differences being observed between the three types of paper sheets, with and without the stamping of the europium complex solution.

When looking at the photographs resulting from the exposure of the papers to UV radiation (λ = 254 nm), Figure 3, it can be concluded that the luminescent lanthanide polymer complex is effectively incorporated in the paper through the stamping method and works as a counterfeit detector. When the complex is excited with a 254 nm wavelength radiation, the white sheets of paper in visible light show luminescence emission of the characteristic color of the respective lanthanide (in this case, Eu²⁺, emitting a red color).

Regarding the *filter* paper, the intense emission of red color is seen by the human eye as it is also captured by the photograph shown in Figure 3, a). When analyzing the UV results of the *base* paper and *office* paper stamped with the EuPSANapPhen solution, one detects the observation of a light pink color, derived from the characteristic red color of the europium (captured for the *base* paper by the photograph shown in Figure 3, b)); for the *office* paper the emission is registered by the human eye, however, its photographic registration is not possible. The blue color that can also be seen in the background, whether on *base* or on the *office* paper, is caused by the optical agents that are incorporated into these sheets of paper during their production processes, for improving paper optical and printing properties. This incorporation of optical agents explains the observation, for the *base* and *office* paper sheets, of a less intense color, since it is not only the lanthanide which emits radiation when under UV excitation, but also the optical agent emits a blue color. The effect of the fillers added to the paper (for example, CaCO₃) during its production, cannot, as well, be ruled out has having this effect either. It is possible to conclude by checking the *base* and *office* papers stamped with the complex solution, that these types of paper, in addition to the *filter* paper, can also receive the incorporation, through the stamping process, of a polymeric complex of luminescent lanthanides that works as an anti-counterfeit security element, when incorporated in cellulosic fiber matrices, only emitting radiation when excited by a UV source.

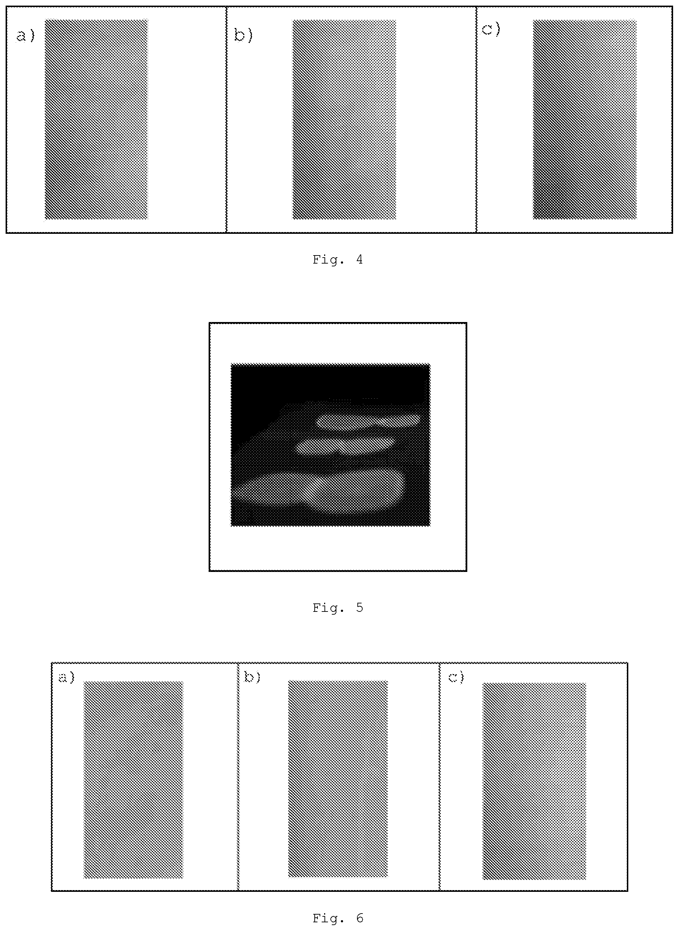

The same process was repeated with the TbPSANapPhen solution, with the results to the naked eye of the TbPSANapPhen stamping of the 3 selected papers presented at Figure 4. Similar results to those obtained after stamping with the EuPSANapPhen solution were observed: no visual differences are observed among the three types of paper sheets considered with and without the stamping of the europium complex solution.

Regarding the results obtained after excitation at 254 nm, Figure 5, the sheet of *filter* paper stamped with TbPSANapPhen showed the intense emission of a green color, characteristic of the terbium, confirming the incorporation of the lanthanide solution in the paper by the stamping process, and the possibility of using these complexes to detect counterfeiting after its incorporation by stamping.

For *base* and *office* papers subjected to UV radiation, the emission of green light was observed, although less intense than that observed for *filter* paper (registered by the human eye and not being possible to get a photographic record of it). As in the case of the europium system, the effects of the presence of optical agents on the *base* and *office* papers are also identifiable here. Regarding the characteristic emission of the terbium, its intensity is less than that of europium and, therefore, it is expected that the intensity of the observed color will be a lower one. This also confirms the incorporation of the solution of the terbium complex in different types of paper by the stamping process and the possibility of using this complex as an anti-counterfeiting element when incorporated in cellulosic fiber matrices.

### b) Paper immersed for a short period of time in the solution of the complex

A second method for incorporating solutions of polymeric complexes of luminescent lanthanides (EuPSANapPhen and TbPSANapPhen) on paper was tested. In this method, all three types of paper sheets *(filter, base* and *office* papers) were immersed for a short period of time in the solution containing the complexes.

In Figure 6, the photographic results to the naked eye visualization of the sheets of paper containing the EuPSANapPhen complex incorporated by the immersion technique can be observed.

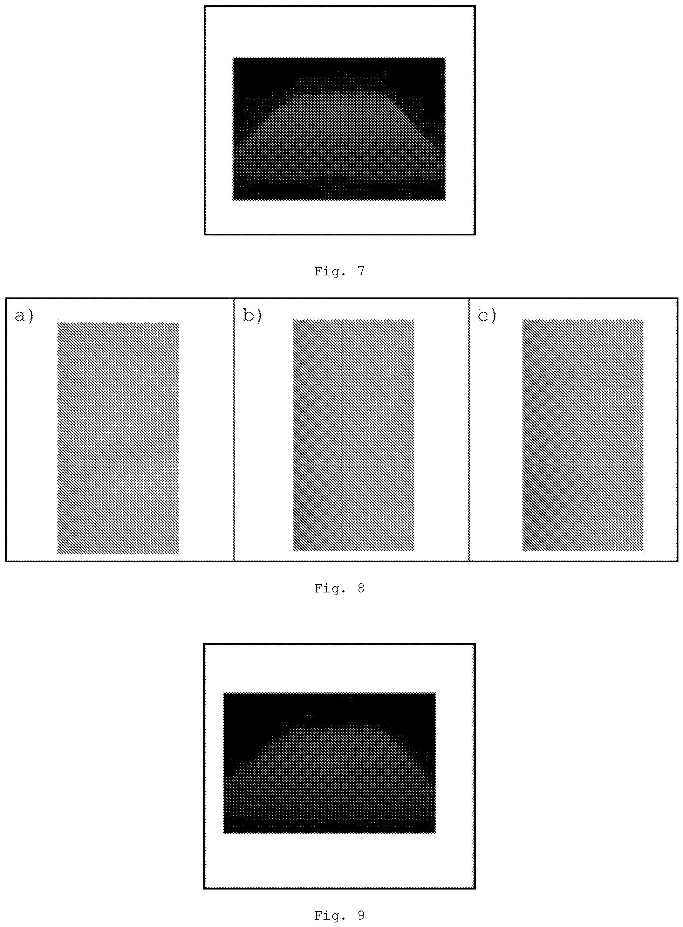

Analyzing these results to the naked eye, no specific differences are observed between the three types of paper *(filter, base* or *office),* nor even differences between a sheet with and without incorporating the complex solution. The incorporation of the complex solution in the paper was later confirmed by subjecting the samples to UV radiation, Figure 7.

Regarding the immersion of the three types of paper in the europium solution, in the case of the *filter* paper, the intense emission of the color red, characteristic of the europium, is observed, under UV excitation at a wavelength of 254 nm, in the entire sheet of paper, this observation being recorded in person by the human eye as well as photographically. Regarding the *base* and *office* paper sheets, results are reported to be similar to those observed previously. The emission of blue color by the optical agents incorporated in these types of paper, during their production processes, reduces the intensity of the red color emitted by the europium (registered by the human eye, not being possible its photographic registration). It is then demonstrated that this method of incorporation, by immersion, can also be successfully applied to these types of papers, in addition to the *filter* paper. Thus, the ability of these complexes to detect counterfeiting after being incorporated in cellulosic fiber matrices, by the immersion technique, has also been successfully tested.

This method was also tested with the terbium complex solution, TbPSANapPhen, and the photographic results to the naked eye can be seen in Figure 8.

Considering the visual observation to the naked eye, there is no specific difference between the types of paper, with and without the incorporation of the complex solution, as previously described for the solution with europium. Thus, and similarly to the results described above, it is not possible to identify the complex on the sheet of paper without further confirmation with an UV lamp, a fact that makes this incorporation method valid again. The same sheets of paper were then subjected to 254 nm radiation and the photographic results are shown in Figure 9.

Once again, the *filter* paper makes it possible to record the emission of an intense green color, characteristic of the incorporation of the terbium complex in this cellulosic matrix by immersion, either by face-to-face observation by the human eye or through photographic recording. That is, when under UV excitation, the *filter* paper sheet, after immersion in the solution containing the terbium complex, emits its characteristic green color, which can be visualized with a high intensity. The *base* and *office* papers also immersed in the TbPSANapPhen solution gave rise to a green emission (registered by the human eye, not being possible to photographically record them), although with less intensity than that observed in the *filter* paper, similarly to the results previously reported. Once again, this is the result of the presence of optical agents incorporated in these types of papers during their production processes. It can be concluded that the incorporation by immersion of TbPSANapPhen in all types of selected papers was also successfully achieved, as well as the possibility of using these complexes in the detection of counterfeiting when incorporated in cellulose fiber matrices was confirmed.

### c) Paper coated with the complex solution

A different method of incorporating luminescent lanthanide polymeric complexes into paper was also tested. Specifically, the same three types of paper sheets *(filter, base* and *office)* were subjected to a coating process with the respective lanthanide complexes (EuPSANapPhen and TbPSANapPhen).

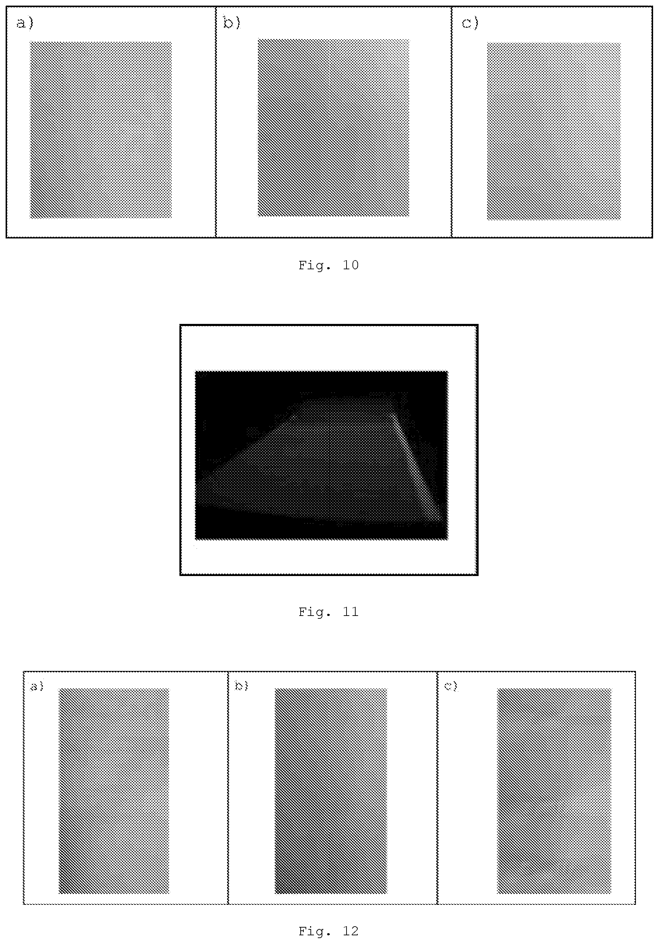

The photographic results to the naked eye of the sheets of paper coated with EuPSANapPhen are shown in Figure 10.

Analyzing the results obtained to the naked eye, no significant differences were observed between the different types of papers, with and without the incorporation of the complex solution. Thus, and similarly to the results described above, an additional confirmation with the UV lamp is necessary to identify the incorporation of the complex in the sheets of paper.

The photographic results of these sheets of paper were obtained under 254 nm UV radiation, as shown in Figure 11.

Observing the sheet of *filter* paper coated with the EuPSANapPhen complex, it is possible to verify, in person by the human eye and photographically, that the europium complex was successfully incorporated into the *filter* paper by the coating method, observing the intense luminescence emission characteristic of the europium-specific red color.

According to the application, it will be possible to optimize the viscosity and the temperature of the coating solution, in order to avoid more concentrated regions of the lanthanide complex on the paper sheet, as is the case photographically recorded of a higher concentration on the periphery of the sheet. Similar results to those verified with the other incorporation techniques were registered for the *base* and *office* papers: the emission of the red color characteristic of the europium is registered directly by the human eye, with less intensity, resulting from the effect of the optical agents incorporated in these types of papers during its production process (photographic registration is not possible). It is then demonstrated that this method of incorporating the EuPSANapPhen complex, by coating, can also be successfully applied to the three types of selected papers, having also confirmed the use of this complex as a counterfeit detector when incorporated in cellulosic matrices.

The same coating process was applied with the terbium solution and the results obtained are very similar to those demonstrated with the other types of incorporation methods chosen. No significant differences were observed with the naked eye between the types of papers, nor is it possible to distinguish the uncoated sheets from those that were coated with the TbPSANapPhen complex.

Regarding the results after the exposure of the samples to UV radiation, there is also the emission of a more intense green light, characteristic of the terbium, in the case of filter paper. This green color is observed by the human eye less intensely in the case of *base* and *office* papers, due to the effect, once again, of the optical agents incorporated during the production processes of these types of paper.

### Response of functionalized paper to metallic solutions

After confirming the incorporation of the solutions of polymeric complexes of luminescent lanthanides (EuPSANapPhen and TbPSANapPhen) through the three different methods explained above (stamping, immersion and coating), and the ability of detecting counterfeit by these complexes when incorporated in cellulosic matrices, it was then proven the first guarantee of security. Therefore, to obtain a second authentication guarantee for the products which integrate these complexes, the papers response to copper and nickel solutions was tested. Copper and nickel were the ions chosen to test these interactions, as they were the ones that caused an almost total reduction of the luminescence characteristic of the lanthanides, as explained previously. Thus, aqueous solutions (10 mM) of the Cu(NO₃)₂.xH₂O and Ni(NO₃)₂.6H₂O salts were applied in specific areas of the selected papers.

### a) Paper stamped with the complex solution

The photographic results of the sheets of paper stamped with the EuPSANapPhen complex after brushing, in specific zones, with the copper and nickel ion solutions are shown in Figure 12.

Analyzing to the naked eye the three types of paper sheets previously stamped with EuPSANapPhen and which have now been subjected to an interaction with copper and nickel solutions, no significant change is observed. In other words, it is not possible to notice, by visual observation, any differences between the sheets of paper before and after the reaction with copper and nickel. Furthermore, to the naked eye, there are also no differences between the types of paper, *filter, base* or *office.*

To have this second guarantee of product authentication, confirmation can only be carried out under a UV source, where the effect of a decreasing luminescence is caused by metal ions, causing the emission of the red color characteristic of the europium to disappear.

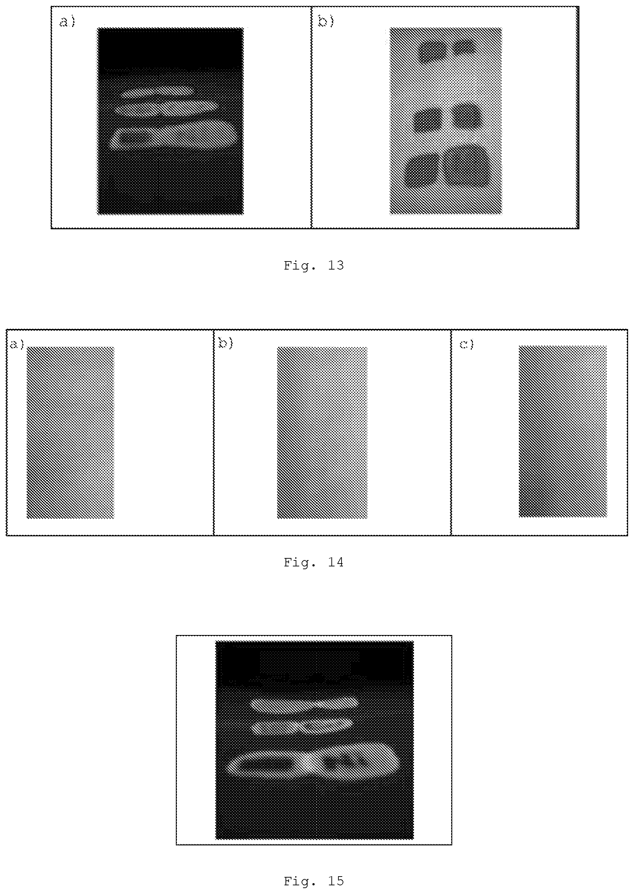

Figure 13 shows the photographic results recorded under UV excitation at a wavelength of 254 nm of the sheets of paper stamped with the europium complex solution and after interaction with Cu²⁺ and Ni²⁺.

Observing the effect of the two metal ions, it can be noticed that the color disappeared immediately and only in the places where the brush moistened with the copper and nickel solutions is applied. Once again, and following the trend of the previous results, in the case of the *filter* paper, the "shadow effect" is observed in person by the human eye as well as it is registered photographically, where the red color typically emitted by the europium completely disappears, due to the action of copper and of nickel.

Observing the results of the *base* paper sheet, the same effect can be observed, either by the human eye or by the photographic record, although the color intensity is lower, as a result of the optical agents added during its production process. It is thus also noticeable the disappearance of the europium emission in the places where the wet brush has touched. The same "shadow effect" is detected by the human eye on the sheet of *office* paper after the addition of copper and nickel solutions.

Thus, it can be concluded that the second guarantee of safety by interacting with copper and nickel solutions is possible for the three types of paper selected and pre-stamped with the europium complex solution.

The sheets of paper previously stamped with the TbPSANapPhen complex also passed the test for the presence of metal ions (Cu²⁺ and Ni²⁺). Figure 14 shows the photographic results obtained to the naked eye of these sheets of paper.

No significant differences are observed between the types of paper sheets, nor is it possible to differentiate a sheet with the presence of copper and nickel ions from a sheet with only the incorporated terbium compound. Thus, and similarly to the previous results, to the naked eye, the purpose of having a sheet that does not present visual differences after the incorporation of the lanthanide complex and interaction with the metal ions is achieved.

Figure 15 shows the photographic results of the *filter* paper sheet stamped with the TbPSANapPhen complex and after interaction with copper and nickel solutions, under UV radiation at a wavelength of 254 nm. Here we have the same type of results as those observed previously, that is, a "shadow effect" is registered by the human eye and photographically in the case of *filter* paper. This effect is also observed by the human eye in the case of *base* and *office* papers, this effect being more difficult to photographically record due to the effect of the optical agents added to these types of paper and the subsequently lower degree of intensity of green light emission by the europium.

### b) Paper immersed in the solution of the luminescent lanthanide polymer complex

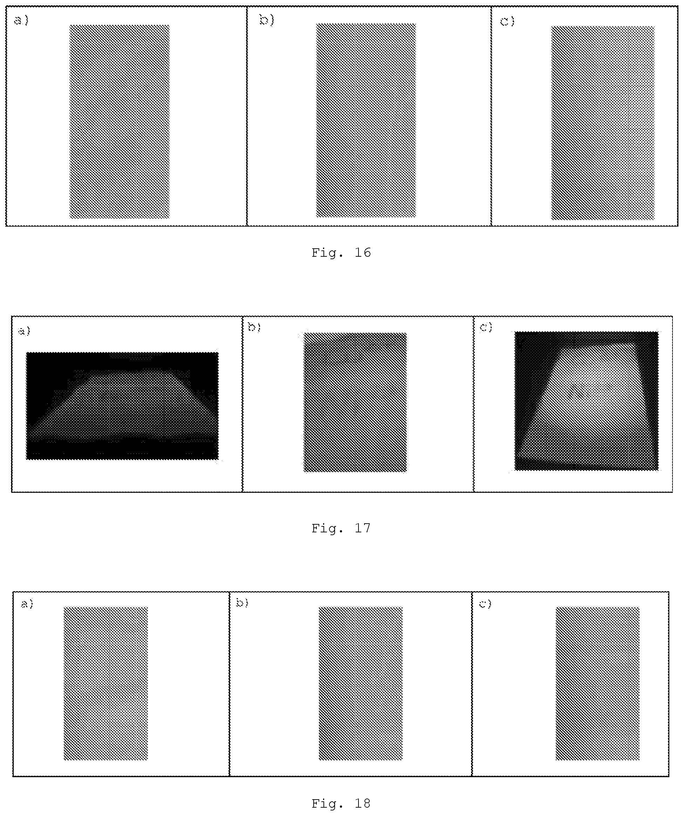

The response to Cu²⁺ and Ni²⁺ was also tested on all sheets of paper previously immersed in lanthanide polymer complex solutions. Figure 16 shows the photographic results recorded to the naked eye.

No significant changes between the types of paper *(filter, base* or *office)* can be seen to the naked eye. In addition, it is also not possible to determine with the naked eye which sheets of paper have been incorporated with the lanthanide complex or which have been in contact with the metallic solutions. Subsequently, the sheets of paper immersed in the EuPSANapPhen complex and with the addition of copper and nickel were subjected to UV radiation at 254 nm, and the photographic results are shown in Figure 17.

Analyzing the *filter* paper, it was noted that the red emission characteristic of the europium suffered total suppression after contact with copper and nickel. Again, it is also important to note that the "shadow effect" resulting from the interaction with the metal ions is immediate and is only seen in the regions of the paper sheet where the solutions were applied. When observing the results of the *base* and *office* paper sheets, the same effect can be observed, even if the intensity of the lanthanide emission is lower due to the presence of optical agents. Thus, the second guarantee of product authentication can also be achieved, in the three types of papers selected and with the method of incorporating the complex by immersion.

The sheets of paper previously immersed in TbPSANapPhen were also subjected to interaction with copper and nickel solutions and the corresponding photographic results can be seen in Figure 18.

The photographic results to the naked eye do not show any particular difference between those obtained before and after the response to metal ions, nor do they show differences between the types of paper *(filter, base* and *office) .*

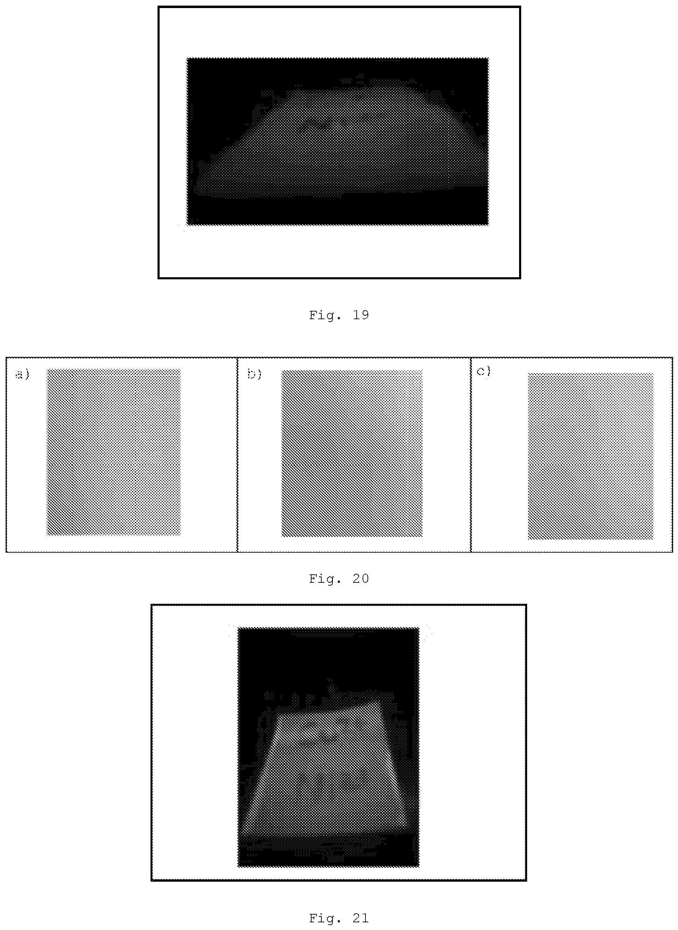

The results obtained with UV excitation at a wavelength of 254 nm were recorded and are shown in Figure 19.

The *filter* paper sheet shows the expected green color. The high intensity of the lanthanide emission, after interaction with copper and nickel, is completely suppressed, thus resulting in the "shadow effect", observed in person by the human eye and in the photographic result. Here, the decrease in the emissions is also seen immediately after the metal solution touches the sheet of paper. Regarding the results obtained for *base* and *office* papers, the conclusions that can be drawn are similar for both types of paper. The "shadow effect" of metallic solutions can also be observed in person by the human eye, making it more difficult to capture this result photographically. Thus, it can be concluded that the second security guarantee can also be achieved successfully, with the terbium complex and using the immersion as a technique for incorporating the complex.

### c) Paper coated with the luminescent lanthanide polymer complex solution

Paper sheets submitted to the coating process, incorporating the polymeric complexes of lanthanides, were also subjected to the same interaction with the presence of copper and nickel ions. The photographic results to the naked eye were recorded and can be seen in Figure 20. The photographic results under a UV lamp were recorded and are shown in Figure 21. Observing the *filter* paper, the "shadow effect" can be observed immediately, either in person by the human eye or photographically, which is proof that the second security guarantee has been achieved. This effect can be easily seen, since the emission of the red color of the europium is suppressed immediately when the solution touches the sheet of paper.

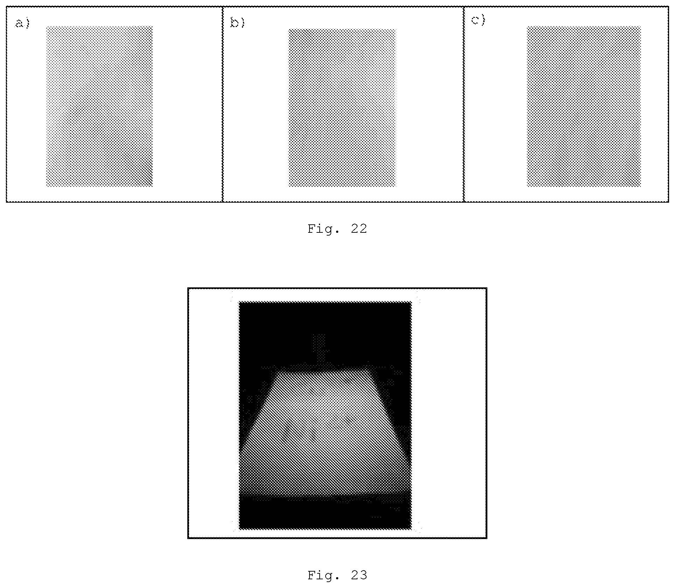

The same coating and interaction procedure with the presence of copper and nickel ions was also applied with the TbPSANapPhen complex solution and the photographic results to the naked eye are explicit in Figure 22. Regarding the results seen to the naked eye, no significant differences are observed between the types of paper, nor is a sheet that reacted with metal ions from one that did not react is recognized.

The photographic results obtained under UV excitation are shown in Figure 23. The results observed are also very similar to those described above for the europium. The "shadow effect" on the *filter* paper can also be perceived immediately after the brush with metallic (copper and nickel) solutions contact with the paper sheet, both in person by the human eye and by the photographic record.

## Claims

1. Method for the detection of counterfeit **characterised by** comprising the following steps:
- incorporating at least one polymeric complex of luminescent lanthanides comprising at least one lanthanide salt, at least one aromatic hydrocarbon and a polymeric matrix by means of stamping, immersion and coating in the formulation of a cellulosic fibers matrix;
- exposing the areas of the cellulosic fibers matrix incorporated with the complex(es) under UV light and observation of the emission of the characteristic color of the lanthanide as the first guarantee of safety;
- adding copper or nickel solutions to the cellulosic fiber matrix;
- exposing the cellulosic fibers matrix under UV light and observation of the suppression of color emission as a second guarantee of safety.

2. The method according to the preceding claim wherein the polymeric complex of luminescent lanthanides of step a) comprises an europium salt, 1-naphthoic acid, 1,10-phenanthroline and poly (sodium acrylate).

3. The method according to claim 1 wherein the polymeric complex of luminescent lanthanides of step a) comprises a terbium salt, 1-naphthoic acid, 1,10-phenanthroline and poly (sodium acrylate).

4. The method according to any of the preceding claims **characterised in that** the addition of copper or nickel solutions is made using a pen containing them.

## Patentansprüche

1. Verfahren zur Erkennung von Fälschungen, **dadurch gekennzeichnet, dass** es die folgenden Schritte umfasst:
- Einarbeiten mindestens eines Polymerkomplexes aus lumineszierenden Lanthaniden, der mindestens ein Lanthanidsalz, mindestens einen aromatischen Kohlenwasserstoff und eine Polymermatrix umfasst, mittels Stempeln, Eintauchen und Beschichten in die Formulierung einer Zellulosefasermatrix;
- Belichten der Bereiche der Zellulosefasermatrix, in die der/die Komplex(e) eingearbeitet sind, unter UV-Licht und Beobachten der Emission der charakteristischen Farbe des Lanthanids als erste Garantie für die Sicherheit;
- Zugabe von Kupfer- oder Nickellösungen zur Zellulosefasermatrix;
- Belichtung der Zellulosefasermatrix unter UV-Licht und Beobachtung der Unterdrückung der Farbemission als zweite Garantie für die Sicherheit.

2. Verfahren nach dem vorhergehenden Anspruch, wobei der Polymerkomplex aus lumineszierenden Lanthaniden aus Schritt a) ein Europiumsalz, 1-Naphthoesäure, 1,10-Phenanthrolin und Poly(natriumacrylat) umfasst.

3. Verfahren nach Anspruch 1, wobei der Polymerkomplex lumineszierender Lanthanide aus Schritt a) ein Terbiumsalz, 1-Naphthoesäure, 1,10-Phenanthrolin und Poly(natriumacrylat) umfasst.

4. Verfahren nach einem der vorhergehenden Ansprüche, **dadurch gekennzeichnet, dass** die Zugabe von Kupfer- oder Nickellösungen unter Verwendung eines diese enthaltenden Stifts erfolgt.

## Revendications

1. Méthode de détection de la contrefaçon **caractérisée en ce qu'**elle comprend les étapes de:
- incorporation au moins un complexe polymère de lanthanides luminescents comprenant au moins un sel de lanthanide, au moins un hydrocarbure aromatique et une matrice polymérique par au moyen estampage, immersion et enduction dans la formulation d'une matrice de fibres cellulosiques ;
- exposition des zones de la matrice de fibres cellulosiques incorporées avec le(x) complexe(s) sous lumière UV et observation de l'émission de la couleur caractéristique du lanthanide comme première garantie de sécurité ;
- ajout de solutions de cuivre ou de nickel à la matrice de fibres cellulosiques ;
- exposition de la matrice de fibres cellulosiques à la lumière UV et observation de la suppression de l'émission de couleur comme deuxième garantie de sécurité.

2. La méthode selon la revendication précédente, dans laquelle le complexe polymérique de lanthanides luminescents de l'étape a) comprend un sel d'europium, de l'acide 1-naphtoïque, de la 1,10-phénanthroline et du poly (acrylate de sodium).

3. La méthode selon la revendication 1, dans laquelle le complexe polymérique de lanthanides luminescents de l'étape a) comprend un sel de terbium, de l'acide 1-naphtoïque, de la 1,10-phénanthroline et du poly (acrylate de sodium).

4. La méthode selon l'une quelconque des revendications précédentes **caractérisé par le fait que** l'addition des solutions de cuivre ou de nickel se fait à l'aide d'un stylo les contenant.
